# EUROPÄISCHE PATENTANMELDUNG

(11) **EP 2 399 769 A2**
(43) Veröffentlichungstag der Anmeldung: **28.12.2011**
(21) Anmeldenummer: 11170471.4
(22) Anmeldetag: 20.06.2011
(51) Int. Cl.: B60L 9/24, B60L 11/12, B60W 20/00, B60K 6/46

(54) **Transportfahrzeug mit einer Mehrzahl elektrischer Maschinen**

(30) Priorität: 28.06.2010 DE 102010025266
(71) Anmelder: Converteam GmbH, 12277 Berlin (DE)
(72) Erfinder: Karnatz, Torsten, 13591 Berlin (DE); Steinhaus, Lutz, 10117 Berlin (DE)
(74) Vertreter: Dreiss

(57) **Zusammenfassung**

Es wird ein Transportfahrzeug mit einer Mehrzahl elektrischer Maschinen (12, ... 20) beschrieben. Es sind Stromrichter vorhanden (28, ... 36) vorhanden, über die die elektrischen Maschinen an einen Gleichstromzwischenkreis (22) angeschlossen sind. Es ist ein Stromrichter (42) vorhanden, über den elektrische Energie in den Gleichstromzwischenkreis (22) eingespeist wird. Sämtliche Stromrichter sind aus einem jeweils gleichartigen leistungselektronischen Modul (LM) aufgebaut, das steuerbare Leistungshalbleiterschalter aufweist, wobei unterschiedliche Funktionsweisen des leistungselektronischen Moduls (LM) durch unterschiedliche Ansteuerungen der Leistungshalbleiterschalter erreichbar sind.

## Beschreibung

Die vorliegende Erfindung betrifft ein Transportfahrzeug mit einer Mehrzahl elektrischer Maschinen, mit Stromrichtern, über die die elektrischen Maschinen an einen Gleichstromzwischenkreis angeschlossen sind, und mit einem Stromrichter, über den elektrische Energie in den Gleichstromzwischenkreis einspeisbar ist. Die Erfindung betrifft ebenfalls einen Schaltschrank für ein entsprechendes Transportfahrzeug sowie einen zugehörigen Stromrichter.

Ein solches Transportfahrzeug ist aus der DE 10 2004 028 353 A1 bekannt. Diese Schrift beschreibt ein Energiemanagementsystem für ein Transportfahrzeug, insbesondere für ein kraftstoffelektrisches Fahrzeug, mit einer Energiequelle, einem Energiezwischenspeicher und einem elektrischen Energieverbraucher, insbesondere einem elektrischen Antrieb. Als Energiequelle wird ein Dieselmotor offenbart, der Generatoren antreibt.

Die Aufgabe der vorliegenden Erfindung besteht in einer weiteren Verbesserung dieses bekannten Transportfahrzeugs.

Diese Aufgabe wird durch ein Transportfahrzeug nach dem Anspruch 1 sowie durch einen Schaltschrank nach dem Anspruch 2 gelöst. Die Erfindung wird ebenfalls durch einen Stromrichter nach dem Anspruch 9 gelöst.

Bei der Erfindung sind sämtliche Stromrichter aus einem jeweils gleichartigen leistungselektronischen Modul aufgebaut, das steuerbare Leistungshalbleiterschalter aufweist, wobei unterschiedliche Funktionsweisen des leistungselektronischen Moduls durch unterschiedliche Ansteuerungen der Leistungshalbleiterschalter erreichbar sind.

Das leistungselektronische Modul kann also auf unterschiedliche Arten angesteuert werden, um auf diese Weise unterschiedliche Funktionsweisen zu realisieren. Dies ermöglicht es, das Modul in größeren Stückzahlen zu fertigen, so dass der Aufwand und die Kosten für die Herstellung vermindert werden. Weiterhin wird auf diese Weise die Montage und auch mögliche Reparaturen des leistungselektronischen Moduls vereinfacht.

Vorzugsweise ist es möglich, das leistungselektronische Modul als Gleichrichter oder als Wechselrichter oder als Ein-/Ausschalter zu betreiben. Diese unterschiedlichen Funktionen des Moduls können dabei auch im Betrieb desselben verändert werden.

Besonders vorteilhaft ist es, wenn das leistungselektronische Modul steckbar ausgebildet ist, und wenn das Transportfahrzeug einen Schaltschrank aufweist, in dem Steckplätze zum Einstecken von leistungselektronischen Modulen vorhanden sind. Auf diese Weise wird die Montage der leistungselektronischen Module weiter vereinfacht.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

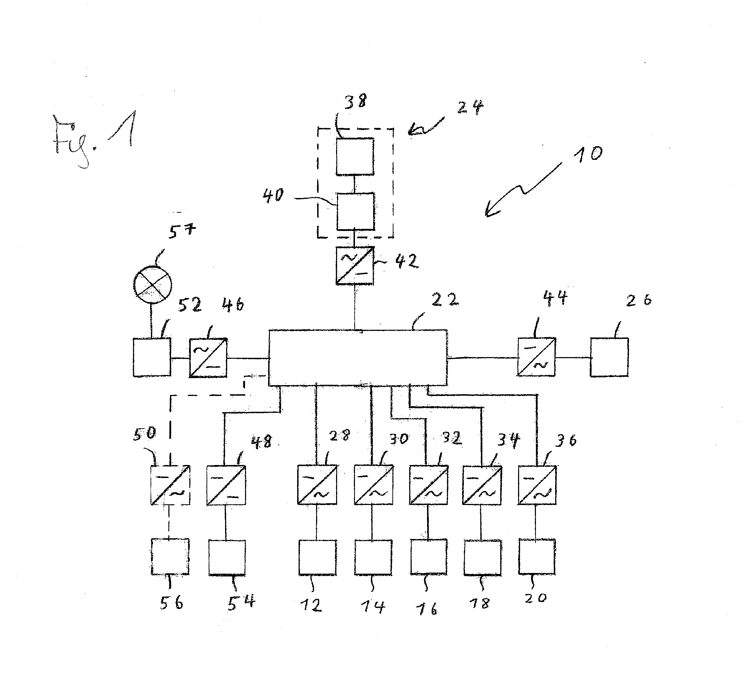

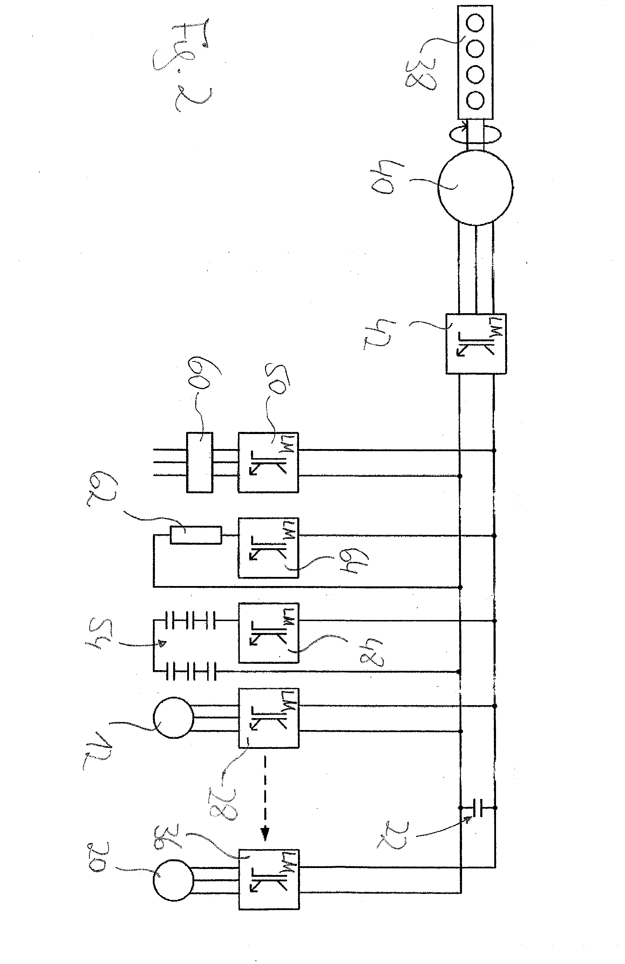

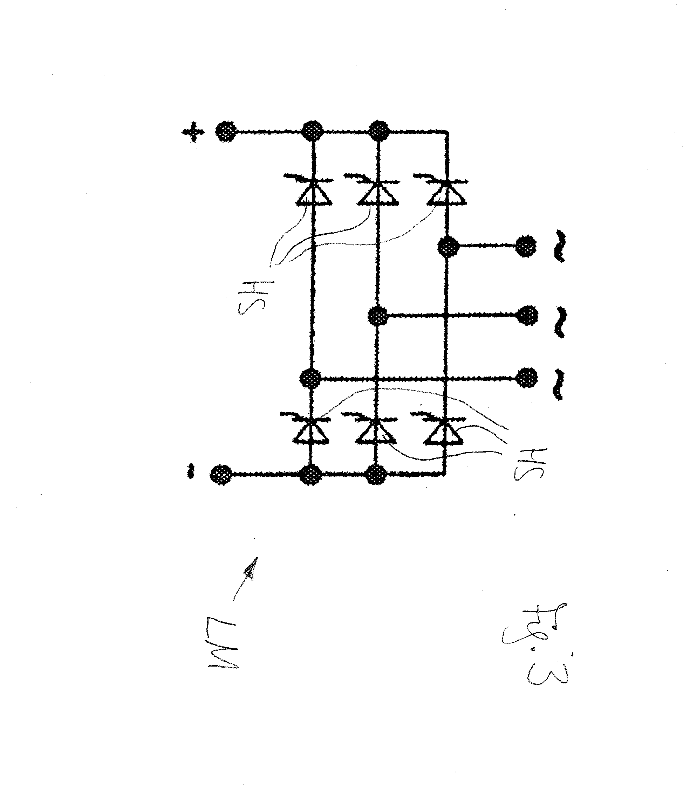

Figur 1 zeigt ein schematisches Blockschaltbild eines Ausführungsbeispiels eines erfindungsgemäßen Transportfahrzeugs, Figur 2 zeigt einen schematischen elektrischen Schaltplan von Teilen des Transportfahrzeugs der Figur 1, und Figur 3 zeigt einen elektrischen Schaltplan eines in dem Schaltplan der Figur 2 verwendeten leistungselektronischen Moduls für das Transportfahrzeug der Figur 1.

Im Einzelnen zeigt die Figur 1 ein Transportfahrzeug 10 mit einer Mehrzahl elektrischer Maschinen 12, 14, 16, 18, 20, einem Gleichstromzwischenkreis 22 und einer ersten Einspeiseeinrichtung 24 und/oder einer zweiten Einspeiseeinrichtung 26.

Bei dem Transportfahrzeug 10 handelt es sich in der dargestellten Ausgestaltung um einen mobilen Kran, beispielsweise einen mobilen Hafenkran, einen gummibereiften Stapelkran oder einen mobilen Baustellenkran mit einem Diesel-elektrischen Hybridantrieb. Es versteht sich, dass die Erfindung auch bei einem ortsgebundenen Kran wie einem ortsfest aufgebauten Baustellenkran oder einen Hallenkran realisierbar ist.

Die elektrischen Maschinen 12, 14, 16, 18, 20 sind über Stromrichter 28, 30, 32, 34, 36 an den Gleichstromzwischenkreis 22 angeschlossen. Die elektrische Maschine 12 dient zum Antreiben einer Hubvorrichtung. Die elektrischen Maschinen 14, 16, 18, 20 dienen zum Antrieb von Fahrwerksmotoren. Diese Ausgestaltung wird zum Beispiel bei einem gummibereiften Stapelkran mit vier Rädern verwendet, bei dem jedes Rad von einem der vier elektrischen Maschinen angetrieben wird. Es versteht sich, dass die Erfindung nicht auf eine solche Ausgestaltung beschränkt ist.

Die erste Einspeiseeinrichtung 24 ist als kraftstoffelektrischer Antrieb realisiert und weist einen Verbrennungsmotor 38 sowie eine als Generator und als Elektromotor betreibbare elektrische Maschine 40 auf. Über einen ersten Stromrichter 42 ist die erste Einspeiseeinrichtung 24 mit dem Gleichstromzwischenkreis 22 verbunden.

Unter einem Stromrichter wird dabei jegliche elektrische Einrichtung verstanden, die zur Umwandlung einer ersten Stromart in eine zweite Stromart geeignet ist. Ist ein Stromrichter beispielsweise dazu vorgesehen, Wechselstrom in Gleichstrom umzuwandeln, so handelt es sich um einen Gleichrichter, umgekehrt um einen Wechselrichter.

Alternativ oder ergänzend zu der ersten Einspeiseeinrichtung 24 ist die zweite Einspeiseeinrichtung 26 über einen zweiten Stromrichter 44 an den Gleichstromzwischenkreis 22 angeschlossen. Bei der zweiten Einspeiseeinrichtung 26 handelt es sich in einer Ausgestaltung um einen Anschluss zur Verbindung des Transportfahrzeugs 10 mit einem externen Stromnetz.

Über weitere Stromrichter 46, 48 und/oder 50 sind eine Hilfsstromversorgung 52 des Transportfahrzeugs 10 sowie ein oder mehrere Energiespeicher 54, 56 des Transportfahrzeugs 10 an den Gleichstromzwischenkreis 22 angeschlossen.

Die Hilfsstromversorgung 52 dient zum Betreiben elektrischer Hilfseinrichtungen des Transportfahrzeugs 10, beispielsweise seiner Beleuchtung 57. Bei dem Energiespeicher 54 handelt es sich in der dargestellten Ausgestaltung um einen Gleichstromspeicher wie eine wiederaufladbare Batterie und/oder eine Kondensatoranordnung. Andere Ausgestaltungen weisen alternativ oder ergänzend zu dem Gleichstromspeicher 54 einen Wechselstromspeicher als Energiespeicher 56 auf. Ein Wechselstromspeicher 56 wird zum Beispiel durch einen mit großem Trägheitsmoment rotierenden Läufer einer elektrischen Maschine realisiert.

Die elektrischen Maschinen 12, 14, 16, 18, 20, 40, 56 sind in einer bevorzugten Ausgestaltung sowohl als Elektromotoren als auch als Generatoren betreibbar. Bei den Stromrichtern 28, 30, 32, 34, 36, 42, 44, 46, 48, 50 handelt es sich bevorzugt um rückspeisefähige Stromrichter. Diese Ausgestaltung ermöglicht einen Energieaustausch über den Gleichstromzwischenkreis 22. Wenn z.B. eine Last abgesenkt wird, wird die zugehörige elektrische Maschine 12 generatorisch betrieben und der von ihr erzeugte elektrische Strom kann zum Antrieb der gleichzeitig als Fahrmotoren arbeitenden elektrischen Maschinen 14, 16, 18, 20 und/oder zum Laden des Energiespeichers 54 und/oder 56 verwendet werden.

Damit muss die momentan erforderliche elektrische Leistung zumindest nicht vollständig durch den Generator 40 erzeugt werden. Sowohl der Generator 40 als auch der antreibende Verbrennungsmotor 38 können dadurch kleiner dimensioniert werden. Außerdem können Belastungsspitzen, die in einer oder mehreren elektrischen Maschinen 12, 14, 16, 18, 20 auftreten, durch Beiträge des elektrischen Energiespeichers 54 und/oder 56 und/oder zeitgleich aus anderen elektrischen Maschinen rückgespeiste elektrische Energie ganz oder teilweise kompensiert werden.

Dadurch kann zum Beispiel ein Ausstoß von Rußwolken beim plötzlichen Lastanstieg eines den Generator 40 antreibenden Dieselmotors als Verbrennungsmotor 38 vermieden oder zumindest verringert werden.

Eine bevorzugte Ausgestaltung sieht darüber hinaus vor, dass der Generator 40 dazu eingerichtet ist, als Elektrostarter für den Verbrennungsmotor 38 betrieben zu werden. Der sonst erforderliche separate Elektrostarter kann daher weggelassen werden.

Das Transportfahrzeug 10 weist einen Schaltschrank mit Steckplätzen für die Stromrichter 28, 30, 32, 34, 36, 42, 44, 46, 48, 50, 58 auf, die bevorzugt als steckbare Stromrichter realisiert sind. Die Stromrichter können dann in Steckplätze des Schaltschranks eingesteckt werden. Dadurch wird eine übersichtliche und kompakte Anordnung der Stromrichter 28, 30, 32, 34, 36, 42, 44, 46, 48, 50, 58 gewährleistet, die eine Installation und einen gegebenenfalls erforderlichen Austausch der Stromrichter erleichtert. Zusätzlich kann in dem Schaltschrank auch der Gleichstromzwischenkreis 22 untergebracht sein.

In der Figur 2 sind der Verbrennungsmotor 38 und die elektrische Maschine 40 dargestellt, die über eine rotierende Welle miteinander verbunden sind. Die Maschine 42 ist mit dem Stromrichter 42 und dieser ist mit dem Gleichstromzwischenkreis 22 verbunden. Die Maschine 42 ist dazu geeignet, generatorisch und motorisch betrieben zu werden. Der Stromrichter 42 ist als leistungselektronisches Modul LM dargestellt und wird anhand der Figur 3 näher erläutert werden. Der Gleichstromzwischenkreis 22 ist in der Figur 2 als Kondensator dargestellt.

An den Gleichstromzwischenkreis 22 sind die elektrischen Maschinen 12, 14, 16, 18, 20 über die Stromrichter 28, 30, 32, 34, 36 angeschlossen, wobei die letztgenannten Stromrichter wieder als leistungselektronische Module LM dargestellt sind.

An den Gleichstromzwischenkreis 22 ist der Stromrichter 48 mit dem Energiespeicher 54 angeschlossen. Der Energiespeicher 54 ist dabei als eine Serienschaltung mehrerer Kondensatoren dargestellt. Weiterhin ist an den Gleichstromzwischenkreis 22 der Stromrichter 50 angeschlossen, der über ein Filter 60 oder dergleichen in nicht-dargestellter Weise an den Energiespeicher 56 angeschlossen ist. Die letztgenannten Stromrichter 48, 50 sind dabei wieder als leistungselektronische Module LM dargestellt.

Schließlich ist an den Gleichstromzwischenkreis 22 beispielhaft noch ein Widerstand 62 über einen Stromrichter 64 angeschlossen. Der Widerstand 62 kann beispielsweise als sogenannter Brems-Widerstand bzw. Brems-Chopper verwendet werden und der Stromrichter 64 ist wieder als leistungselektronisches Modul LM dargestellt.

Sämtliche Stromrichter 28, 30, 32, 34, 36, 42, 44, 46, 48, 50, 64 sind jeweils aus einem gleichartigen leistungselektronischen Modul LM aufgebaut. Dieses Modul LM wird innerhalb des Transportfahrzeugs 10 für unterschiedliche Funktionen eingesetzt, weist aber trotzdem immer denselben schaltungstechnischen Aufbau auf. Die unterschiedlichen Funktionen des leistungselektronischen Moduls LM werden durch unterschiedliche Ansteuerungen desselben erreicht.

In der Figur 3 ist das leistungselektronische Modul LM dargestellt. Es handelt sich dabei beispielhaft um eine vollgesteuerte Sechspuls-Brückenschaltung. Dabei sind drei Serienschaltungen aus jeweils zwei elektronischen Leistungshalbleiterschaltern HS zueinander parallel geschaltet. Die Verbindungspunkte der beiden Leistungshalbleiterschaltern HS der jeweiligen Serienschaltungen stellen im vorliegenden Ausführungsbeispiel einen dreiphasigen Wechselstromabgriff dar, während die jeweils äußeren Punkte der drei Serienschaltungen die beiden Pole eines Gleichstromabgriffs darstellen.

Die Leistungshalbleiterschalter HS sind steuerbar und können beispielsweise als Transistor oder als Thyristor oder als IGBT (IGBT = insulated gate bipolar transistor) oder dergleichen ausgebildet sein. Zur Ansteuerung der Leistungshalbleiterschalter HS ist ein nicht-dargestelltes Steuergerät vorgesehen, das beispielsweise als Mikroprozessor oder Personalcomputer ausgebildet sein kann. Das leistungselektronische Modul LM ist steckbar ausgeführt und kann damit in die bereits erwähnten Steckplätze des Schaltschranks des Transportfahrzeugs 10 eingesteckt werden. In diesem Schaltschrank kann auch das Steuergerät untergebracht sein.

Es versteht sich, dass das leistungselektronische Modul LM auch andersartig ausgebildet sein kann. Beispielsweise können auch Halbbrücken vorgesehen sein oder es können Freilaufdioden vorhanden sein oder dergleichen.

Das leistungselektronische Modul LM ist dazu geeignet, elektrische Energie von dem Wechselstromabgriff zu dem Gleichstromabgriff und umgekehrt zu transportieren. Hinsichtlich des Energieflusses kann das leistungselektronische Modul LM somit in beide Richtungen betrieben werden. Das leistungselektronische Modul LM kann damit als Gleichrichter, wie auch als Wechselrichter betrieben werden.

Diese unterschiedliche Funktionsweise des leistungselektronischen Moduls LM wird durch eine entsprechende Ansteuerung der Leistungshalbleiterschalter HS durch das Steuergerät erreicht. Mittels dieser Ansteuerung ist es dabei möglich, auch im laufenden Betrieb des Transportfahrzeugs die Funktionsweise des leistungselektronischen Moduls LM zu ändern, also beispielsweise die Richtung des Energieflusses umzukehren.

Im Falle des Stromrichters 42 wird das leistungselektronische Modul LM im Normalfall beispielsweise als Gleichrichter betrieben, während es im Falle der Stromrichter 28, 30, 32, 34, 36, 50 üblicherweise als Wechselrichter fungiert.

Weiterhin ist das leistungselektronische Modul LM dazu geeignet, als reine Schaltvorrichtung verwendet zu werden. Dies ist beispielsweise bei den Stromrichtern 48, 64 der Fall. Dort werden die Leistungshalbleiterschalter HS derart von dem Steuergerät angesteuert, dass das gesamte Modul LM zwischen den beiden Polen des Gleichstromabgriffs wie ein Ein-/Ausschalter wirkt, also entweder einen Kurzschluss oder eine Unterbrechung darstellt. Der Wechselstromabgriff des leistungselektronischen Moduls LM wird in diesem Fall nicht verwendet.

Es versteht sich, dass die beschriebene Einrichtung nicht nur bei einem Transportfahrzeug zur Anwendung kommen kann, sondern auch bei anderen technischen Geräten, bei denen eine Mehrzahl elektrischer Maschinen verwendet wird. Gegebenenfalls ist es dabei ausreichend, den für das Transportfahrzeug 10 beschriebenen Schaltschrank mit den darin untergebrachten Stromrichtern und gegebenenfalls dem Gleichstromzwischenkreis und dem Steuergerät auf das andere technische Gerät zu übertragen bzw. anzuwenden.

## Patentansprüche

1. Transportfahrzeug (10) mit einer Mehrzahl elektrischer Maschinen (12, 14, 16, 18, 20), mit Stromrichtern (28, 30, 32, 34, 36), über die die elektrischen Maschinen an einen Gleichstromzwischenkreis (22) angeschlossen sind, und mit einem Stromrichter (42), über den elektrische Energie in den Gleichstromzwischenkreis (22) eingespeist wird, **dadurch gekennzeichnet, dass** sämtliche Stromrichter aus einem jeweils gleichartigen leistungselektronischen Modul (LM) aufgebaut sind, das steuerbare Leistungshalbleiterschalter (HS) aufweist, und dass unterschiedliche Funktionsweisen des leistungselektronischen Moduls (LM) durch unterschiedliche Ansteuerungen der Leistungshalbleiterschalter (HS) erreichbar sind.

2. Schaltschrank insbesondere für ein Transportfahrzeug (10), wobei das Transportfahrzeug (10) eine Mehrzahl von elektrischen Maschinen (12, 14, 16, 18, 20) aufweist, wobei der Schaltschrank Stromrichter (28, 30, 32, 34, 36) aufweist, über die die elektrischen Maschinen an einen Gleichstromzwischenkreis (22) anschließbar sind, und wobei der Schaltschrank einen Stromrichter (42) aufweist, über den elektrische Energie in den Gleichstromzwischenkreis (22) einspeisbar ist, **dadurch gekennzeichnet, dass** sämtliche Stromrichter aus einem jeweils gleichartigen leistungselektronischen Modul (LM) aufgebaut sind, das steuerbare Leistungshalbleiterschalter (HS) aufweist, und dass unterschiedliche Funktionsweisen des leistungselektronischen Moduls (LM) durch unterschiedliche Ansteuerungen der Leistungshalbleiterschalter (HS) erreichbar sind.

3. Transportfahrzeug (10) oder Schaltschrank nach Anspruch 1 oder 2, wobei das leistungselektronische Modul (LM) als Gleichrichter betreibbar ist.

4. Transportfahrzeug (10) oder Schaltschrank nach Anspruch 1 oder 2, wobei das leistungselektronische Modul (LM) als Wechselrichter betreibbar ist.

5. Transportfahrzeug (10) oder Schaltschrank nach Anspruch 1 oder 2, wobei das leistungselektronische Modul (LM) als Ein-/Ausschalter betreibbar ist.

6. Transportfahrzeug (10) oder Schaltschrank nach einem der vorstehenden Ansprüche, wobei die Leistungshalbleiterschalter (HS) als IGBTs (IGBT = insulated gate bipolar transistor) ausgebildet sind.

7. Transportfahrzeug (10) oder Schaltschrank nach Anspruch 5, wobei das leistungselektronische Modul (LM) steckbar ausgebildet ist, und wobei der Schaltschrank Steckplätze zum Einstecken von leistungselektronischen Modulen (LM) aufweist.

8. Transportfahrzeug (10) oder Schaltschrank nach einem der vorstehenden Ansprüche, wobei es sich bei dem Transportfahrzeug (10) um einen Kran handelt, insbesondere um einen Hafenkran oder einen Stapelkran oder einen Hallenkran oder einen Baustellenkran oder dergleichen.

9. Stromrichter für ein Transportfahrzeug (10) oder einen Schaltschrank nach einem der vorstehenden Ansprüche.

10. Stromrichter nach Anspruch 10, wobei das leistungselektronische Modul (LM) als vollgesteuerte Sechspuls-Brückenschaltung ausgebildet ist.
